(19) Europäisches Patentamt
European Patent Office
Office européen des brevets

(11) **EP 2 039 126 B1**

(12) **FASCICULE DE BREVET EUROPEEN**

(45) Date de publication et mention
de la délivrance du brevet:
**06.02.2019 Bulletin 2019/06**

(21) Numéro de dépôt: **07823560.3**

(22) Date de dépôt: **10.07.2007**

(51) Int Cl.:
***H04L 29/08*** *(2006.01)*

(86) Numéro de dépôt international:
**PCT/FR2007/051638**

(87) Numéro de publication internationale:
**WO 2008/017772 (14.02.2008 Gazette 2008/07)**

(54) **PROCEDE POUR LUTTER CONTRE LA DIFFUSION ILLICITE D'OEUVRES PROTEGEES ET SYSTEME INFORMATIQUE POUR LA MISE EN OEUVRE D'UN TEL PROCEDE**

VERFAHREN ZUR BEKÄMPFUNG DER UNERWÜNSCHTEN VERBREITUNG GESCHÜTZTER MATERIALIEN UND COMPUTERSYSTEM ZUR DURCHFÜHRUNG DIESES VERFAHRENS

METHOD FOR COMBATTING THE ILLICIT DISTRIBUTION OF PROTECTED MATERIAL AND COMPUTER SYSTEM FOR CARRYING OUT SAID METHOD

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **10.07.2006 FR 0652892**

(43) Date de publication de la demande:
**25.03.2009 Bulletin 2009/13**

(73) Titulaire: **Trident Media Guard Tmg
44230 St Sébastien Sur Loire (FR)**

(72) Inventeurs:
 • **GUISLAIN, Alain**
 **F-44230 St Sébastien Sur Loire (FR)**
 • **CASALTA, Bastien**
 **F-44300 Nantes (FR)**
 • **ROUIBIA, Soufiane**
 **F-44300 Nantes (FR)**

(74) Mandataire: **Nony
11 rue Saint-Georges
75009 Paris (FR)**

(56) Documents cités:
 • **TONG FAMILY BLOG: "UniteTheCows- Kazaa Participation hack!"[Online] 7 octobre 2002 (2002-10-07), XP002417715 Extrait de l'Internet: URL:http://www.tongfamily.com/music/unitet hecows_ka.php> [extrait le 2007-01-31]**
 • **SAAF R: "WRITTEN TESTIMONY FOR THE OVERSIGHT HEARING ON Piracy of Intellectual Property on Peer-to-Peer Networks" [Online] 26 septembre 2002 (2002-09-26), , XP002299691 Extrait de l'Internet: URL:http://www.mediadefender.com/press%20a bout%20MD/randy_saaf_testimony.htm> [extrait le 2004-10-06] page 2, ligne 4,5, alinéa 1 page 4, dernier alinéa**
 • **ANAGNOSTAKIS K G ET AL: "Exchange-based incentive mechanisms for peer-to-peer file sharing" 24 mars 2004 (2004-03-24), DISTRIBUTED COMPUTING SYSTEMS, 2004. PROCEEDINGS. 24TH INTERNATIONAL CONFERENCE ON HACHIOJI, TOKYO, JAPAN 24-26 MARCH 2004, PISCATAWAY, NJ, USA,IEEE, PAGE(S) 524-533 , XP010693789 ISBN: 0-7695-2086-3 page 1, colonne 2, alinéa 2**

EP 2 039 126 B1

**Description**

La présente invention concerne les procédés pour lutter contre la diffusion illicite d'oeuvres protégées sur des réseaux informatiques tels qu'Internet.

L'invention vise plus particulièrement à empêcher le téléchargement illégal à travers des systèmes d'échange de *pair* à *pair* encore appelés *P2P.*

Actuellement, de nombreux fichiers sont diffusés au moyen du système d'échange *BitTorrent,* qui permet le téléchargement d'un fichier morcelé en blocs depuis différents utilisateurs connectés au réseau, un tel téléchargement étant qualifié de *multisourcing.*

Dans un tel système d'échange, il est habituel de désigner par *client* n'importe quel utilisateur du réseau, par *pair* n'importe quel *client* distant connecté à un *client* courant et pouvant transmettre tout ou partie du fichier recherché. Une *source* désigne un *pair* ayant téléchargé la totalité du fichier et ayant pour seule tâche de le diffuser. Les *pairs* non *sources (leachers)* sont des *clients* souhaitant télécharger le fichier mais ne le possédant pas en totalité. Un *traqueur* est un serveur qui répertorie quels *pairs* sont impliqués dans la distribution du fichier recherché. Le terme *free-riders* désigne des *clients* cherchant à recevoir des fichiers sans en partager.

Contrairement à d'autres systèmes d'échanges *P2P,* dans *BitTorrent* les *clients* ne font pas partie d'un réseau global qui comprendrait tous les utilisateurs du système d'échange mais sont regroupés par fichiers. Ainsi, pour chaque fichier distribué, le *traqueur* gère un annuaire dynamique des *clients* intéressés.

Le système d'échange *BitTorrent* repose sur un logiciel d'échange s'exécutant chez chaque *client* et mettant en oeuvre essentiellement deux protocoles de communication.

Le premier protocole concerne les échanges entre les *traqueurs* et les *clients.* Lorsqu'un *client* souhaite télécharger un fichier, il contacte un *traqueur* référençant ce fichier et reçoit en retour une liste d'adresses informatiques l'informant d'autres *pairs* intéressés par ce même fichier et auxquels il peut tenter de se connecter. A intervalles réguliers, chaque *client* met à jour des statistiques du *traqueur* en lui communiquant son état de téléchargement (*download*) du fichier en question et la quantité de données envoyées (*upload*) vers d'autres *clients.* Les données communiquées au *traqueur* lui permettent de superviser la distribution d'un fichier et, dans le système d'échange *BitTorrent,* le *traqueur* est agencé pour ne plus communiquer d'informations à un *client* ne partageant pas suffisamment d'informations avec les autres *clients.*

Les échanges de données entre *clients* s'effectuent selon un second protocole. Le système d'échange *BitTorrent* permet à un *client* à la fois de télécharger le fichier recherché et de diffuser ce même fichier vers d'autres *clients*. Chaque fois qu'un *client* achève le téléchargement d'un bloc, il l'annonce aux *pairs* auxquels il est connecté. Ceci permet à chaque *client* de connaître à tout moment les blocs que les *pairs* peuvent partager. Pour des raisons de bande passante, le nombre de *pairs* qu'un *client* peut servir est limité.

Le logiciel d'échange installé chez le *client* est donc agencé pour sélectionner les *pairs* à servir. Un critère de sélection retenu dans le système d'échange *BitTorrent* consiste à déterminer les *pairs* chez qui le *client* télécharge le plus vite afin de privilégier la réciprocité des échanges. Ainsi, de manière périodique, par exemple toutes les dix secondes, le logiciel d'échange évalue quels sont les *pairs* les plus performants pour servir le *client* en mesurant à quelle vitesse ces *pairs* lui envoient des données.

*BitTorrent* peut ainsi être qualifié de système d'échange sélectif et crée une sorte de cercle vertueux lors du partage des fichiers, car celui qui ne donne que peu ou rien ne recevra rien.

Dans un but d'ouverture aux autres *pairs* du réseau et dans l'éventualité où l'un au moins d'entre eux offrirait une vitesse de téléchargement encore plus élevée, le logiciel d'échange teste de façon cyclique au hasard un autre *pair* n'ayant pas encore servi le *client* pour savoir si en réponse à un envoi de données, cet autre *pair* n'en renverrait pas à son tour.

Lorsqu'une nouvelle connexion est établie avec un *pair,* le logiciel privilégie ce dernier parmi tous les *pairs* qui sont connectés et encore non servis.

Lorsque le *client* servant les *pairs* est une *source,* le logiciel d'échange ne prend plus en compte lors de la sélection des *pairs* leur vitesse d'*upload,* puisqu'elle est alors nulle, mais la vitesse de téléchargement offerte.

L'état de la technique offre plusieurs solutions conventionnelles visant à s'opposer au téléchargement illicite de fichiers protégés par des droits d'auteur.

L'une d'entre elles consiste à introduire dans le réseau des fichiers de mauvaise qualité, de façon à décourager les internautes, comme divulgué dans les demandes WO 2004/107704 et US 2005/0267945. Une telle solution s'avère inadaptée lorsque le logiciel d'échange installé chez le *client* compare une clé (*hash*) du fichier à télécharger avec une clé de référence, comme c'est le cas dans le système d'échange *BitTorrent.*

La publication US 2005/0267945 décrit une autre solution souvent rencontrée consistant à rediriger les internautes vers des ressources non disponibles sur le réseau ou vers des sites de téléchargement légaux. Cette solution n'empêche pas un *pair* d'être servi par une *source* une fois connecté à celle-ci. Le document "TONG FAMILY BLOG: "UniteTheCows- Kazaa Participation hack!", 7 octobre 2002 (2002-10-07), XP002417715, Extrait de l'Internet:

URL:http:// www.tongfamily.com/music/unitethecows_ka.php" décrit un procédé ou les clients envoient des fausses données à des serveurs pour obtenir les fichiers de manière privilégiée.

Enfin, il est aussi quelquefois fait appel à des filtres capables d'analyser une requête portant sur un fichier à télécharger, comme dans la demande WO 2006/021772. Selon le caractère légal ou non du partage de ce fichier, la requête est ou non transmise. Une telle solution est coûteuse en termes de bande passante.

Les solutions de la technique antérieure s'avèrent ainsi insuffisamment efficaces vis-à-vis de systèmes d'échange sélectifs tels que *BitTorrent.*

L'invention a donc pour objet un nouveau procédé comme décrit dans la revendication 1.

L'expression « fausses données » désigne des données ne correspondant pas à l'état réel du *client contrôlé.*

L'expression « *client contrôlé* » désigne un *client* vers lequel le transfert des données est acceptable car celui-ci ne les retransmettra pas illégalement à d'autres *clients.* Ainsi, une fois qu'un *client contrôlé* a terminé le téléchargement d'un fichier concernant une oeuvre protégée, le contenu de ce fichier peut être effacé.

L'invention permet de ralentir la diffusion illicite d'un fichier car celle-ci aura lieu au moins partiellement vers des *clients contrôlés.*

Une pluralité de *clients contrôlés* peut être constituée par des terminaux autonomes.

Les *clients contrôlés,* qui cherchent à télécharger les mêmes fichiers que les autres *clients* du réseau, notamment les plus recherchés, sans partager l'information reçue, permettent de retarder les échanges dans le réseau de façon significative, voire même de le bloquer. Le nombre de *clients contrôlés* peut être par exemple compris entre 10 et 25.

Selon un exemple de mise en oeuvre de l'invention, au moins un *client contrôlé* se connecte au *traqueur* de manière à obtenir une liste mise à jour d'adresses de *pairs,* notamment de *sources,* dans le réseau. La connexion au *traqueur* peut s'effectuer de manière périodique.

Toujours dans un exemple de mise en oeuvre de l'invention, au moins un *client contrôlé* peut être agencé pour, dès qu'il a reçu les coordonnées d'un *pair* du réseau susceptible de le servir, notamment une *source,* essayer de se connecter à ce *pair.* Ces coordonnées peuvent lui avoir été communiquées par un *serveur* supervisant le fonctionnement de plusieurs *clients contrôlés.*

De préférence, chaque *client contrôlé* ne partage pas d'information avec d'autres *pairs* du réseau, afin de renforcer encore le processus de lutte contre la diffusion illicite d'une oeuvre, non seulement en occupant les *sources* mais en évitant de rediffuser des données téléchargées.

Les fausses données peuvent être adressées à un *pair,* notamment à une *source,* directement par le ou les *clients contrôlés,* notamment lorsqu'il s'agit de lutter contre la diffusion illicite fondée sur le système d'échange *BitTorrent.* Le choix de la manière dont les fausses données parviennent au *pair* dépendra du système d'échange impliqué.

Le procédé selon l'invention peut être mis en oeuvre dans un système d'échange sélectif où la ou les caractéristiques retenues pour la sélection des *clients* comportent l'avancement du téléchargement d'un fichier, comme c'est le cas dans le système d'échange *BitTorrent.* Le logiciel d'échange s'exécutant chez les *pairs* peut alors être agencé pour privilégier le transfert des données vers des *clients* dont le téléchargement est le plus avancé, les fausses données adressées par les *clients contrôlés* pouvant alors comporter une fausse indication sur l'avancement du téléchargement.

La ou les caractéristiques en question peuvent encore comporter une information relative à l'*upload* du *client,* comme c'est encore le cas pour le système d'échange *BitTorrent.* Les fausses données peuvent alors comporter une fausse indication relative à l'*upload* du *client contrôlé.*

La ou les caractéristiques concernées peuvent également comporter la vitesse de téléchargement du *pair* vers le *client.*

La ou les caractéristiques en question peuvent en outre comporter le nombre de *pairs* avec lesquels le *client* échange des informations, la quantité d'information déjà téléchargée, les numéros des blocs constituant l'information téléchargée et l'état du *client,* c'est-à-dire s'il s'agit d'un *leacher* ou d'une *source.*

Bien entendu, ces caractéristiques mentionnées ci-dessus ne sont pas limitatives et peuvent dépendre du système d'échange concerné.

Le réseau peut comporter au moins un *traqueur* agencé pour transmettre à au moins un *client* ou à un *pair* les adresses d'autres *clients* ou *pairs* du réseau. De fausses données peuvent être adressées au *traqueur* par le ou les *clients contrôlés* ou par un *serveur* de supervision d'une pluralité de *clients contrôlés* ou par tout autre système informatique associé à au moins un *client contrôlé.* Ces fausses données peuvent par exemple comporter une fausse information relative à la quantité de données envoyée au moins par un *client contrôlé* vers d'autres *clients* du réseau, à la quantité de données reçue par un *client contrôlé* ou encore à la quantité de données restant à recevoir dans le cadre du téléchargement d'un fichier, cela afin d'éviter que le *traqueur* ne cesse de répertorier certains *clients contrôlés* en raison de l'absence de diffusion de données vers d'autres *clients.*

Chaque *client* contrôlé peut être agencé pour se connecter au *traqueur* afin de récupérer une liste d'adresses de *clients* du réseau et dans le cas où aucune adresse de *source* ne figure dans liste, pour se reconnecter au *traqueur* afin d'obtenir une nouvelle liste.

Dans un exemple de mise en oeuvre de l'invention, le procédé comporte l'étape consistant à déconnecter un *client contrôlé* après la connexion de celui-ci à un *pair,* notamment une *source,* dans l'hypothèse où ce *client contrôlé* ne serait pas servi par le *pair* et que le nombre de *clients contrôlés* servis par le *pair* serait inférieur au nombre de *clients* maximal que le *pair* peut servir. Une tentative de connexion au *pair* d'un nouveau *client contrôlé* peut faire suite à cette déconnexion. La déconnexion précitée peut être commandée par le *serveur* de supervision de ce *client contrôlé.*

Le nombre de *clients contrôlés* connectés à chaque *pair* peut être comptabilisé, notamment par le *serveur* de supervision des *clients contrôlés,* afin de ne pas chercher à connecter un nouveau *client contrôlé* à un *pair* lorsque celui-ci n'est connecté qu'à des *clients contrôlés* et ne peut servir davantage de *clients* compte tenu de la bande passante.

Dans un exemple de mise en oeuvre de l'invention, de fausses données sont envoyées au *traqueur* de manière périodique, par exemple par le *serveur* de supervision, avec une période qui dépend de la taille du contenu à télécharger et/ou du nombre de *sources* dans le réseau. Ces fausses données peuvent être adressées par les *clients contrôlés* ou par un *serveur* les supervisant.

La période précitée est par exemple déterminée par la formule

$$\begin{cases} \tau = \dfrac{T}{N_{sources}} * k \\ \text{avec } \tau = 10 \text{ secondes si } N_{sources} < 50, \end{cases}$$

où $T$ désigne la taille du contenu du fichier à télécharger (en méga octets), $k$ est une constante et $N_{sources}$ est le nombre de sources.

Selon un exemple de mise en oeuvre de l'invention, les *clients contrôlés* sont agencés pour se connecter seulement aux *sources.* Cela permet d'accroître l'efficacité de la lutte contre la diffusion illicite d'une oeuvre comparativement à la connexion aux seuls *pairs* n'ayant pas terminé le téléchargement. Néanmoins, l'invention n'exclut pas dans une variante de mise en oeuvre la connexion à des *pairs* non encore *sources.*

L'invention pourra être mieux comprise à la lecture de la description détaillée qui va suivre, d'un exemple de mise en oeuvre non limitatif de celle-ci, et à l'examen du dessin annexé, sur lequel :

- la figure 1 représente sous forme de schéma en blocs un réseau informatique mettant en oeuvre un système d'échange sélectif tel que *BitTorrent,*
- la figure 2 représente de façon schématique et partielle, un exemple d'architecture informatique pour la mise en oeuvre du procédé selon l'invention, et
- les figures 3 et 4 illustrent des étapes dans la mise en oeuvre de l'invention.

La description qui suit est faite en supposant que le système d'échange est *BitTorrent* et que le réseau est Internet. Bien entendu, il ne s'agit que d'un exemple et l'invention peut s'appliquer à d'autres systèmes d'échange et à d'autres réseaux. Le réseau peut ainsi être, par exemple, un réseau local comme Ethernet ou un réseau de campus universitaire. Il peut également s'agir de réseaux utilisant des technologies sans fil tels que des réseaux téléphoniques.

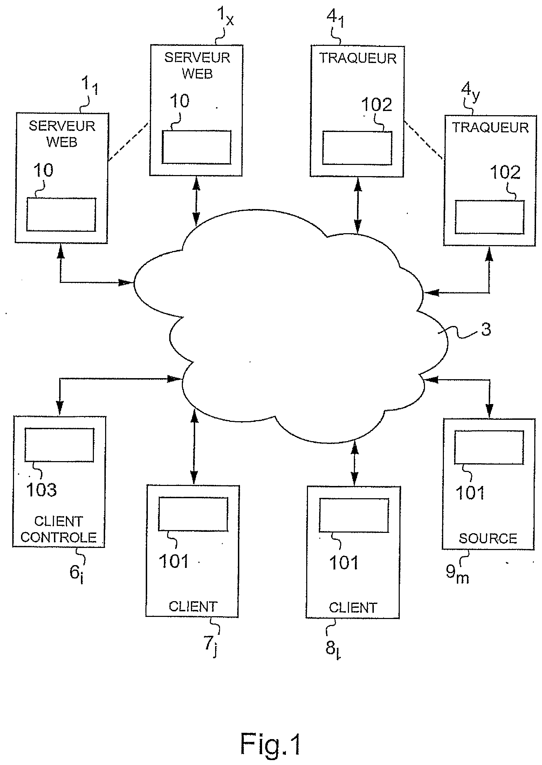

La figure 1 représente le réseau informatique 3 permettant les échanges, en l'espèce Internet, auquel sont connectés des *serveurs* $1_1$ à $1_x$, des *traqueurs* $4_1$ à $4_j$, des *clients* $7_j$ ne servant aucun *pair (free-riders),* des *clients* $8_l$ partageant des données *(leachers)* et des *clients* $9_m$ qui sont des *sources (seeders).*

Les *clients* $7_j$, $8_l$ et $9_m$ peuvent être des ordinateurs personnels ou d'autres types de terminaux informatiques, par exemple des assistants personnels numériques, des smartphones ou des machines plus puissantes, comme des *serveurs* informatiques.

Dans le système d'échange *BitTorrent,* les *serveurs* $1_l$ à $1_x$ contiennent des informations générales 10 qui identifient le ou les fichiers pouvant être téléchargés, en décrivant des attributs de ceux-ci, par exemple le nom, la taille, le nombre de blocs éventuels, et donnent l'adresse du ou des *traqueurs* $4_1$ à $4_y$ qui supervisent la distribution d'un fichier donné.

Chaque *client* $7_j$ à $9_m$ exécute une version client d'un logiciel d'échange 101 tel que par exemple *Bitcomet, Azureus, BitTorrent client officiel, Burst, G3torrent, ABC, etc.,* permettant de se connecter aux *traqueurs* $4_1$ à $4_y$ et de partager des données avec d'autres *clients* intéressés par le même fichier.

Les *traqueurs* $4_1$ à $4_y$ exécutent une version traqueur du logiciel d'échange 102.

Conformément à l'invention, au moins un *client contrôlé* $6_i$ est connecté au réseau 3.

Ce *client contrôlé* exécute une version client modifiée 103 du logiciel d'échange utilisé par les autres *clients,* cette version permettant d'interroger les *traqueurs* et d'échanger avec des *pairs* autres que d'autres *clients contrôlés.*

Lors de l'échange entre un *client contrôlé* $6_i$ et un *traqueur* $4_p$, une liste de tous les *pairs* connectés au réseau 3 et susceptible de le servir est envoyée à ce *client contrôlé* $6_i$. Cette liste comporte notamment au moins les coordonnées

d'une *source* $9_m$ qui possède la totalité du fichier convoité. Si aucune adresse de *source* n'est présente dans la liste envoyée par le *traqueur,* le *client contrôlé* $6_i$ recontacte le *traqueur* pour demander une nouvelle liste.

Ce fichier à télécharger peut par exemple correspondre à un film sous format *.arr, *.mpg, *.mov, *.esf, *.wmv, *.dvx, *.qt, *.avi, entre autres. Il peut également s'agir d'au moins un fichier musical sous format *.wav, *.mp3, *.ra, *.ram, *.aiff, *.en *.mid, entre autres ou d'images sous format *.jpg, *.bmp, *.png, *.tif, *.ps, *.eps, entre autres. Il peut encore s'agir de progiciels, de jeux ou de tout autre programme protégé par des droits de propriété intellectuelle.

Quand le transfert par la *source* $9_m$ vers un *client* $8_1$ de données est achevé, le logiciel d'échange 101 exécuté par ce *client* $8_1$ avertit les autres *pairs* en relation avec ce *client* $8_1$ que ce bloc est disponible chez celui-ci.

Si toutes les données sont disponibles sur le réseau ailleurs que chez la *source* $9_m$, celle-ci peut se déconnecter.

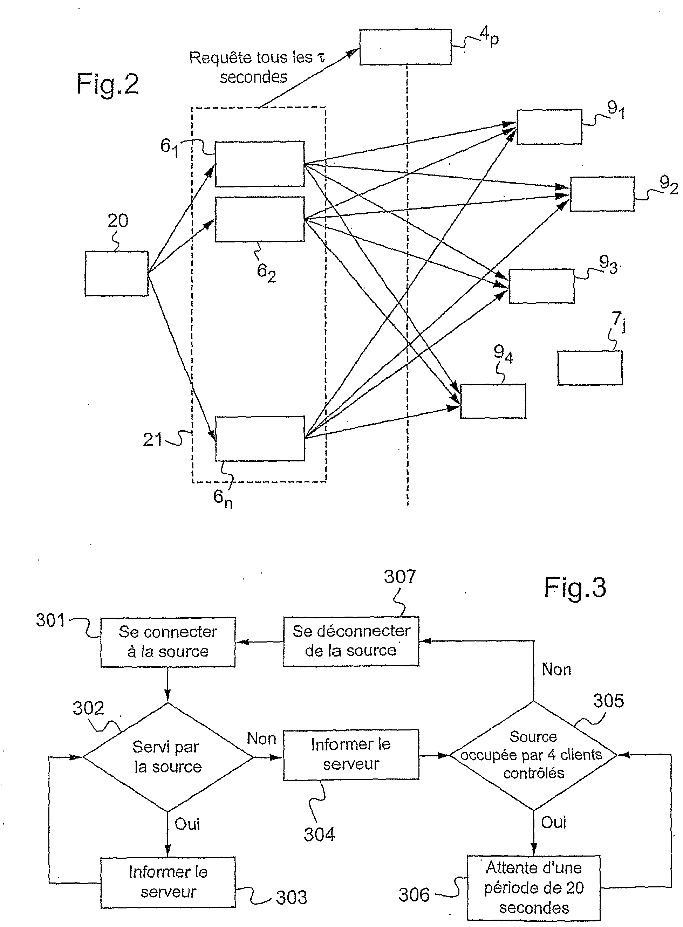

La figure 2 représente un exemple d'architecture informatique pour la mise en oeuvre de l'invention, dans lequel un *serveur* 20 est chargé de superviser plusieurs *clients contrôlés* $6_1$, $6_2$ à $6_n$, n pouvant être supérieur ou égal à 10 par exemple.

Ces *clients contrôlés* $6_i$ peuvent être simulés par un même système informatique 21 ou en variante, peuvent être associés respectivement à des terminaux distincts. Le cas échéant, le *serveur* 20 peut être intégré au système informatique 21. Le système informatique 21 amène les *clients contrôlés* $6_i$ à effectuer tout d'abord une recherche des *sources* présentes dans le réseau 3. Une fois ces *sources* identifiées, les *clients contrôlés* se connectent à ces *sources* afin de les occuper le plus possible. Dans l'exemple illustré, les *clients contrôlés* $6_1$ à $6_n$ sont connectés à diverses sources $9_1$ à $9_4$ du réseau 3.

Les *clients contrôlés* $6_i$ peuvent également communiquer avec le *traqueur* $4_p$ mais ne sont pas agencés pour communiquer, dans l'exemple considéré, avec les *free-riders* $7_j$.

La figure 3 est un organigramme illustrant certaines tâches effectuées par un *client contrôlé* $6_i$.

L'objectif de tout *client contrôlé* $6_i$ est d'être servi le plus longtemps possible par toute *source* $9_m$ à laquelle il est connecté.

Le *client contrôlé* $6_i$ peut donc tout d'abord se connecter lors d'une étape 301 à la *source* $9_m$ dont les coordonnées lui ont été fournies par le *traqueur* $4_p$.

Lors de l'étape suivante 302, si le *client* $6_i$ est servi par la *source* $9_m$, il en informe le *serveur* 20 à l'étape 303 et effectue alors à nouveau l'étape 302.

Lorsque le *client* $6_i$ n'est pas servi par la *source* $9_m$, il en informe le *serveur* 20 au cours d'une étape 304. Le *serveur* 20 détermine lors d'une étape 305 si la *source* $9_m$ est déjà occupée par d'autres *clients contrôlés* $6_i$.

Dans une version courante de *BitTorent,* une *source* peut servir quatre *clients* différents. Si ces *clients* sont déjà des *clients contrôlés,* le *client contrôlé* $6_i$ est mis en attente à une étape 306 durant un certain délai, par exemple de l'ordre de 20 secondes, avant d'effectuer à nouveau l'étape 305. Lorsque la *source* $9_m$ ne sert pas uniquement des *clients contrôlés,* le *client contrôlé* $6_i$ se déconnecte au cours d'une étape 307 de la *source* $9_m$ et recommence l'étape 301 en profitant d'une caractéristique du système d'échange *BitTorent* consistant à privilégier, lors du choix par une *source* $9_m$ des clients à servir, ceux qui se sont le plus récemment connectés.

Conformément à un aspect de l'invention, les *clients contrôlés* transmettent à la *source* $9_m$ de fausses indications concernant leur vitesse de téléchargement, indiquant par exemple une vitesse plus grande que celle des autres *clients* dans le réseau.

Les *clients contrôlés* $6_i$ envoient périodiquement des requêtes au *traqueur* $4_p$. Ces requêtes comportent le nombre d'octets reçus, un faux nombre d'octets envoyés et le nombre d'octets restant à recevoir. Les fausses données permettent de fausser les statistiques du *traqueur* $4_p$ et de favoriser les *clients contrôlés* $6_i$ lors de la procédure de sélection effectuée par le logiciel d'échange 102.

Ces requêtes peuvent être envoyées à une période dépendant de la taille T (en mégaoctets) du contenu à télécharger et du nombre $N_{sources}$ de *sources* dans le réseau, selon la relation

$$\begin{cases} \tau = \dfrac{T}{N_{sources}} * k \\ \tau = 10 \text{ secondes si } N_{sources} < 50, \end{cases}$$

k étant une constante fixée de façon empirique.

La requête adressée au *traqueur* comporte également l'état actuel du *client contrôlé,* c'est-à-dire s'il vient de commencer le transfert, s'il est en cours de transfert, ou s'il a fini le transfert.

Le *traqueur* $4_p$ répond à cette requête en envoyant une liste de *pairs* intéressés par le même fichier.

La valeur de $\tau$ ci-dessus permet d'augmenter la probabilité qu'un *client contrôlé* $6_i$ soit connecté à l'ensemble des *sources* $9_m$ présentes dans le réseau, un *client contrôlé* $6_i$ pouvant se connecter par exemple jusqu'à plus de 1000 *sources* à la fois.

Le *serveur* 20 est agencé pour répertorier le nombre de *sources* auxquelles chaque *client contrôlé* $6_i$ est connecté et surpervise l'avancement du téléchargement du fichier. Une fois qu'un *client contrôlé* $6_i$ a terminé le téléchargement du contenu, le *serveur* 20 provoque l'effacement du contenu téléchargé par ce *client contrôlé* $6_i$.

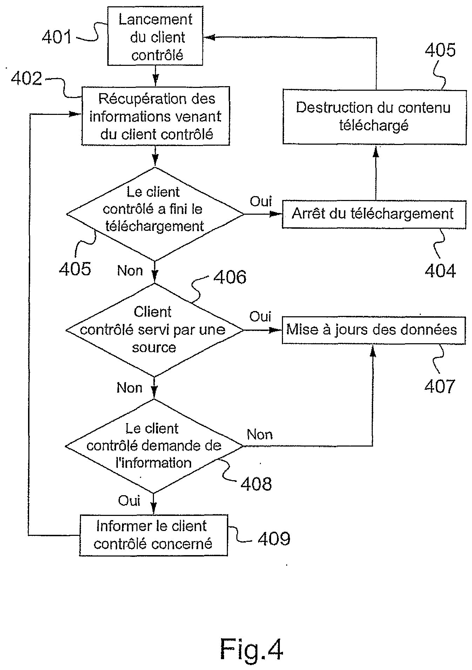

La figure 4 est un organigramme illustrant certaines tâches effectuées par le *serveur* 20.

Lors d'une première étape 401, les coordonnées d'une *source* $9_m$ sont communiquées à un *client contrôlé* $6_i$ en attente de se connecter.

Lors d'une étape suivante 402, le *serveur* 20 récupère des informations que lui envoie ce *client contrôlé* $6_i$ et qui lui permettent par exemple de mettre à jour la liste et/ou le nombre des *clients contrôlés* servis par une *source* $9_m$.

A l'étape 403, le *serveur* 20 évalue si le *client contrôlé* $6_i$ a terminé le téléchargement. Si c'est le cas, le téléchargement est arrêté à l'étape 404, et son contenu est ensuite détruit à l'étape 405, puis le *serveur* recommence l'étape 401.

Lorsque le téléchargement n'est pas fini, le *serveur* 20 évalue au cours de l'étape 406 si le *client contrôlé* $6_i$ est toujours servi par la *source* $9_m$. Si c'est toujours le cas, le *serveur* 20 met à jour l'état d'occupation des *sources.*

Lorsque le *client contrôlé* $6_i$ n'est plus servi par la *source* $9_m$, il peut, au cours d'une étape 408, demander des informations au *serveur* 20 concernant par exemple le nombre de *clients contrôlés* actuellement connectés à cette *source.* Le *serveur* 20 fournit alors les informations demandées au *client contrôlé* $6_i$ avant de recommencer l'étape 402.

Si le *client contrôlé* $6_i$ n'a pas demandé d'information, le *serveur 20* effectue l'étape 407 de mise à jour des données, notamment de l'état d'occupation des sources.

L'invention n'est pas limitée au système d'échange *BitTorent* et s'applique également à d'autres systèmes d'échange du même type.

L'invention peut être mise en oeuvre conjointement à d'autres mesures destinées à lutter contre la diffusion illicite d'oeuvres protégées.

L'expression « comportant un » doit se comprendre comme étant synonyme de « comportant au moins un » sauf si le contraire est spécifié.

## Revendications

1. Procédé pour ralentir, voire éliminer, la propagation illégale de données protégées dans un réseau *pair* à *pair* comportant au moins un *pair* ($9_m$) exécutant un logiciel d'échange (101) configuré pour diffuser lesdites données vers au moins un *client* selon un protocole d'échange sélectif permettant au *pair* ($9_m$) d'opérer une sélection des *clients* vers lesquels des données sont transférées, cette sélection s'effectuant en fonction d'une ou plusieurs caractéristiques des *clients,* procédé dans lequel de fausses données sont adressées au *pair* par lesdits clients, de manière à influencer la sélection des *clients* servis par le *pair* ($9_m$), afin d'amener ce *pair* ($9_m$) à privilégier le transfert vers au moins un *client* contrôlé ($6_i$) vers lequel le transfert desdites données est acceptable, ledit au moins un client contrôlé ($6_i$) ne retransmettant pas les données illégalement à d'autres clients.

2. .Procédé selon la revendication 1, dans lequel au moins un *client* contrôlé *est* ($6_i$) agencé pour générer de fausses données et se comporter de manière à influencer la sélection des *clients* vers lesquels sont transférées les données par le *pair* ($9_m$) et amener ce *pair* ($9_m$) à privilégier le transfert vers le *client* contrôlé ($6_i$).

3. Procédé selon l'une des revendications précédentes, la ou les caractéristiques des *clients* comportant l'avancement du téléchargement des données, le logiciel d'échange (101) étant agencé pour privilégier le transfert des données vers des *clients* ayant avancé le plus le téléchargement, les fausses données comportant une fausse indication sur l'avancement du téléchargement.

4. Procédé selon l'une quelconque des revendications précédentes, la ou les caractéristiques des *clients* comportant une information relative à l'*upload* du *client* et les fausses données comportant une fausse indication relative à l'*upload* du *client contrôlé* ($6_i$).

5. Procédé selon l'une quelconque des revendications précédentes, la ou les caractéristiques des *clients* comportant la vitesse de transfert des données du *pair* ($9_m$) vers le *client* et les fausses données comportant une fausse indication relative à la vitesse de transfert du *pair* ($9_m$) vers le *client contrôlé* ($6_i$).

6. Procédé selon l'une quelconque des revendications précédentes, le ou les *clients contrôlés* ($6_i$) étant agencés pour chercher à télécharger les mêmes fichiers que les plus recherchés par les autres *clients* du réseau.

7. Procédé selon l'une des revendications précédentes, le nombre de *clients contrôlés* étant compris entre 10 et 25 au moins un *client contrôlé* ($6_i$) étant agencés pour communiquer avec un *serveur* (20) de supervision des *clients contrôlés.*

8. Procédé selon l'une quelconque des revendications précédentes, le ou les *clients contrôlés* ($6_i$) étant agencés pour ne se connecter qu'à des *sources.*

9. Procédé selon l'une quelconque des revendications précédentes, le ou les *clients contrôlés* ($6_i$) étant agencés pour ne pas partager d'informations avec d'autres *clients* ($7_j$, $8_l$) du réseau.

10. Procédé selon l'une quelconque des revendications précédentes, le réseau comportant au moins un *traqueur* ($4_p$) agencé pour transmettre à au moins un *client* les adresses d'autres *clients* ou *pairs* du réseau.

11. Procédé selon la revendication précédente, dans lequel de fausses informations sont adressées au *traqueur* ($4_p$) par le ou les *clients contrôlés* ($6_i$), les fausses informations comportant une fausse information relative à la quantité de données envoyées par le *client contrôlé* ($6_i$) vers d'autres *clients* du réseau et/ou une fausse information relative à la quantité de données envoyées par un *pair* ($9_m$) au *client contrôlé* (6j) et/ou une fausse information relative à la quantité de données que le *pair* ($9_m$) doit encore envoyer au *client contrôlé* (6j)..

12. Procédé selon l'une des revendications 10 et 11, dans lequel chaque *client contrôlé* est agencé pour se connecter au *traqueur* afin de récupérer une liste d'adresses de *clients* du réseau et dans le cas où aucune adresse de *source* ne figure dans cette liste, pour se reconnecter au *traqueur* afin d'obtenir une nouvelle liste.

13. Procédé selon l'une des revendications 11 et 12, dans lequel les fausses données envoyées au *traqueur* ($4_p$) le sont de manière périodique, la période dépendant au moins de l'un de la taille (T) du contenu à télécharger, du nombre $N_{sources}$ de *sources* ($9_m$) dans le réseau et d'un paramètre k, par la formule

$$\begin{cases} \tau = \dfrac{T}{N_{sources}} * k \\ \tau = 10 \text{ secondes si } N_{sources} < 50 \text{ } sources \end{cases}$$

14. Procédé selon l'une quelconque des revendications précédentes, dans lequel après la connexion d'un *client contrôlé* ($6_i$) à un *pair* ($9_m$), dans l'hypothèse où ce *client contrôlé* ($6_i$) n'est pas servi par le *pair* ($9_m$), et que le nombre de *clients contrôlé* ($6_i$), servis par le *pair* ($9_m$), est inférieur au nombre de *clients* maximal que le *pair* ($9_m$) peut servir, ce *client contrôlé* ($6_i$), est déconnecté du *pair* ($9_m$), puis un nouveau *client contrôlé* ($6_i$) est connecté au *pair* ($9_m$).

15. Procédé selon une quelconque des revendications précédentes dans lequel on comptabilise le nombre de *clients contrôlés* ($6_i$) connectés à chaque *pair* ($9_m$).

**Patentansprüche**

1. Verfahren zur Verlangsamung oder sogar Beseitigung der illegalen Verbreitung geschützter Daten in einem Peer-to-Peer-Netz, das wenigstens einen Peer ($9_m$) aufweist, der eine Datenaustauschsoftware (101) ausführt, die dafür ausgelegt ist, die Daten an wenigstens einen Client gemäß einem selektiven Datenaustauschprotokoll rundzusenden, das dem Peer ($9_m$) ermöglicht, eine Auswahl der Clients vorzunehmen, zu welchen Daten übertragen werden, wobei diese Auswahl in Abhängigkeit von einem oder mehreren Merkmalen der Clients durchgeführt wird, wobei bei diesem Verfahren falsche Daten von den Clients an den Peer adressiert werden, um die Auswahl der von dem Peer ($9_m$) bedienten Clients zu beeinflussen, um diesen Peer ($9_m$) zu veranlassen, die Übertragung zu wenigstens einem kontrollierten Client ($6_i$), zu dem die Übertragung der Daten akzeptabel ist, zu privilegieren, wobei dieser wenigstens eine kontrollierte Client ($6_i$) die Daten nicht illegal zu anderen Clients weiterüberträgt.

2. Verfahren nach Anspruch 1, wobei wenigstens ein kontrollierter Client ($6_j$) dafür ausgelegt ist, falsche Daten zu erzeugen und sich so zu verhalten, dass die Auswahl der Clients, zu denen die Daten durch den Peer ($9_m$) übertragen werden, beeinflusst wird und dieser Peer ($9_m$) veranlasst wird, die Übertragung zu dem kontrollierten Client ($6_j$) zu privilegieren.

**3.** Verfahren nach einem der vorhergehenden Ansprüche, wobei das Merkmal oder die Merkmale der Clients den Fortschritt des Herunterladens der Daten umfassen, wobei die Datenaustauschsoftware (101) dazu eingerichtet ist, die Übertragung der Daten zu den Clients zu privilegieren, auf denen das Herunterladen am weitesten fortgeschritten ist, wobei die falschen Daten eine falsche Angabe über den Fortschritt des Herunterladens beinhalten.

**4.** Verfahren nach einem der vorhergehenden Ansprüche, wobei das Merkmal oder die Merkmale der Clients eine Information bezüglich des Uploads des Clients umfassen und die falschen Daten eine falsche Angabe bezüglich des Uploads des kontrollierten Clients ($6_i$) beinhalten.

**5.** Verfahren nach einem der vorhergehenden Ansprüche, wobei das Merkmal oder die Merkmale der Clients die Übertragungsgeschwindigkeit der Daten vom Peer ($9_m$) zum Client umfassen und die falschen Daten eine falsche Angabe bezüglich der Übertragungsgeschwindigkeit vom Peer ($9_m$) zu dem kontrollierten Client ($6_i$) beinhalten.

**6.** Verfahren nach einem der vorhergehenden Ansprüche, wobei der oder die kontrollierten Clients ($6_i$) dazu eingerichtet sind zu versuchen, dieselben Dateien wie die, welche von den anderen Clients des Netzes am meisten gesucht werden, herunterzuladen.

**7.** Verfahren nach einem der vorhergehenden Ansprüche, wobei die Anzahl kontrollierter Clients zwischen 10 und 25 liegt, wobei wenigstens ein kontrollierter Client ($6_i$) dazu eingerichtet ist, mit einem Server (20) zur Überwachung der kontrollierten Clients zu kommunizieren.

**8.** Verfahren nach einem der vorhergehenden Ansprüche, wobei der oder die kontrollierten Clients ($6_i$) dazu eingerichtet sind, sich nur mit Quellen zu verbinden.

**9.** Verfahren nach einem der vorhergehenden Ansprüche, wobei der oder die kontrollierten Clients ($6_i$) dazu eingerichtet sind, Informationen nicht mit anderen Clients ($7_j$, $8_l$) des Netzes zu teilen.

**10.** Verfahren nach einem der vorhergehenden Ansprüche, wobei das Netz wenigstens einen Tracker ($4_p$) aufweist, der dazu eingerichtet ist, zu wenigstens einem Client die Adressen anderer Clients oder Peers des Netzes zu übertragen.

**11.** Verfahren nach dem vorhergehenden Anspruch, wobei durch den oder die kontrollierten Clients ($6_i$) falsche Informationen an den Tracker ($4_p$) adressiert werden, wobei die falschen Informationen eine falsche Information bezüglich der Menge an Daten, die von dem kontrollierten Client ($6_i$) an andere Clients des Netzes gesendet wurden, und/oder eine falsche Information bezüglich der Menge an Daten, die von einem Peer ($9_m$) an den kontrollierten Client ($6_j$) gesendet wurden, und/oder eine falsche Information bezüglich der Menge an Daten, welche der Peer ($9_m$) noch an den kontrollierten Client ($6_j$) senden muss, beinhalten.

**12.** Verfahren nach einem der Ansprüche 10 und 11, wobei jeder kontrollierte Client dazu eingerichtet ist, sich mit dem Tracker zu verbinden, um eine Liste von Adressen von Clients des Netzes zu beziehen, und um, falls in dieser Liste keine Adresse einer Quelle enthalten ist, sich erneut mit dem Tracker zu verbinden, um eine neue Liste zu erhalten.

**13.** Verfahren nach einem der Ansprüche 11 und 12, wobei die falschen Daten, die an den Tracker ($4_p$) gesendet werden, periodisch gesendet werden, wobei die Periode von wenigstens einem von dem Umfang (T) des herunterzuladenden Inhalts, der Anzahl $N_{sources}$ von Quellen ($9_m$) im Netz und einem Parameter k abhängt, gemäß der Formel

$$\begin{cases} \tau = \dfrac{T}{N_{sources}} * k \\ \tau = 10 \text{ Sekunden, falls } N_{sources} < 50 \text{ Quellen} \end{cases}$$

**14.** Verfahren nach einem der vorhergehenden Ansprüche, wobei nach der Verbindung eines kontrollierten Clients ($6_i$) mit einem Peer ($9_m$) unter der Annahme, dass dieser kontrollierte Client ($6_i$) nicht von dem Peer ($9_m$) bedient wird und dass die Anzahl kontrollierter Clients ($6_i$), die von dem Peer ($9_m$) bedient werden, kleiner als die maximale Anzahl von Clients ist, welche der Peer ($9_m$) bedienen kann, dieser kontrollierte Client ($6_i$) von dem Peer ($9_m$) getrennt wird und anschließend ein neuer kontrollierter Client ($6_i$) mit dem Peer ($9_m$) verbunden wird.

**15.** Verfahren nach einem der vorhergehenden Ansprüche, wobei die Anzahl kontrollierter Clients ($6_i$) gezählt wird, die

mit jedem Peer ($9_m$) verbunden sind.

**Claims**

1. Method for hindering, or indeed eliminating, the illegal propagation of protected data in a *peer* to *peer* network comprising at least one *peer* ($9_m$) executing exchange software (101) configured to distribute said data to at least one *client* according to a selective exchange protocol allowing the *peer* ($9_m$) to make a selection of the *clients* to which data are transferred, this selection being performed as a function of one or more characteristics of the *clients,* in which method false data are addressed to the *peer* by said clients so as to influence the selection of the *clients* served by the *peer* ($9_m$), in order to induce this *peer* ($9_m$) to favor transfer to at least one *controlled client* ($6_i$) to which the transfer of said data is acceptable, said at least one controlled client ($6_i$) not retransmitting the data illegally to other clients.

2. Method according to Claim 1, in which at least one controlled *client* is ($6_j$) designed to generate false data and to behave in such a way as to influence the selection of the *clients* to which the data are transferred by the *peer* ($9_m$) and to make this *peer* ($9_m$) favour the transfer to the controlled *client* ($6_j$).

3. Method according to either of the preceding claims, the characteristic or characteristics of the *clients* comprising the progress of the downloading of the data, the exchange software (101) being designed to favor the transfer of the data to *clients* having progressed the downloading the most, the false data comprising a false indication about the progress of the download.

4. Method according to any one of the preceding claims, the characteristic or characteristics of the *clients* comprising an item of information relating to the *upload* of the *client* and the false data comprising a false indication relating to the *upload* of the *controlled client* ($6_i$).

5. Method according to any one of the preceding claims, the characteristic or characteristics of the *clients* comprising the speed of transfer of the data from the *peer* ($9_m$) to the *client* and the false data comprising a false indication relating to the speed of transfer from the *peer* ($9_m$) to the *controlled client* ($6_i$).

6. Method according to any one of the preceding claims, the *controlled client* or *clients* ($6_i$) being designed to seek to download the same files as the ones most searched for by the other *clients* of the network.

7. Method according to one of the preceding claims, the number of *controlled clients* being between 10 and 25, at least one *controlled client* ($6_i$) being designed to communicate with a *server* (20) for supervising the *controlled clients.*

8. Method according to any one of the preceding claims, the *controlled client* or *clients* ($6_i$) being designed to connect only to *sources.*

9. Method according to any one of the preceding claims, the *controlled client* or *clients* ($6_i$) being arranged so as not to share information with other *clients* ($7_j$, $8_l$) of the network.

10. Method according to any one of the preceding claims, the network comprising at least one *tracker* ($4_p$) designed to transmit to at least one *client* the addresses of other *clients* or *peers* of the network.

11. Method according to the preceding claim, in which false information is addressed to the *tracker* ($4_p$) by the *controlled client* or *clients* ($6_i$), the false information comprising a false item of information relating to the quantity of data sent by the *controlled client* or *clients* ($6_i$) to *other clients* of the network and/or a false item of information relating to the quantity of data sent by a *peer* ($9_m$) to the *controlled client* ($6_j$) and/or a false item of information relating to the quantity of data that the *peer* ($9_m$) must still send to the *controlled client* ($6_j$).

12. Method according to either of Claims 10 to 11, in which each *controlled client* is designed to connect to the *tracker* so as to recover a list of addresses of *clients* of the network and in the case where no *source* address appears in this list, to reconnect to the *tracker* so as to obtain a new list.

13. Method according to either of Claims 11 and 12, in which the false data sent to the *tracker* ($4_p$) is sent in a periodic manner, the period depending at least on one of the size (T) of the content to be downloaded, the number $N_{sources}$

of *sources* ($9_m$) in the network and a parameter k, through the formula

$$\begin{cases} \tau = \dfrac{T}{N_{sources}} * k \\ \tau = 10 \text{ seconds if } N_{sources} < 50 \; sources \end{cases}$$

**14.** Method according to any one of the preceding claims, in which after the connection of a *controlled client* ($6_i$) to a *peer* ($9_m$), assuming that this *controlled client* ($6_i$) is not served by the *peer* ($9_m$), and that the number of *controlled clients* ($6_i$), served by the *peer* ($9_m$), is less than the maximum number of *clients* that the *peer* ($9_m$) can serve, this *controlled client* ($6_i$) is disconnected from the *peer* ($9_m$), then a new *controlled client* ($6_i$) is connected to the *peer* ($9_m$).

**15.** Method according to any one of the preceding claims in which the number of *controlled clients* ($6_i$) connected to each *peer* ($9_m$) is reckoned.

Fig.1

Fig.2

Requête tous les τ
secondes

$4_p$

$6_1$

$9_1$

20

$6_2$

$9_2$

$9_3$

$7_j$

$9_4$

$21$

$6_n$

307

Fig.3

301 — Se connecter
à la source

Se déconnecter
de la source

302

Servi par
la source

Non

Informer le
serveur

Source
occupée par 4 clients
contrôlés

305

Non

Oui

304

Oui

Informer le
serveur

303

306 — Attente d'une
période de 20
secondes

Fig.4

## RÉFÉRENCES CITÉES DANS LA DESCRIPTION

**Documents brevets cités dans la description**

- WO 2004107704 A
- US 20050267945 A
- WO 2006021772 A

**Littérature non-brevet citée dans la description**

- *TONG FAMILY BLOG: ''UniteTheCows- Kazaa Participation hack,* 07 Octobre 2002, URL:http://www.tongfamily.com/music/unitethecows_ka.php